# EUROPÄISCHE PATENTSCHRIFT

(11) **EP 2 408 825 B1**
(45) Veröffentlichungstag und Bekanntmachung des Hinweises auf die Patenterteilung: **14.08.2013**
(21) Anmeldenummer: 10709427.8
(22) Anmeldetag: 16.03.2010
(51) Int. Cl.: C08F 8/00, C08F 210/14, C08L 51/06, C08L 91/06, C09D 5/03, C09D 7/12, C09D 151/06, C09D 191/06, C09D 7/00

(54) **VERWENDUNG VON COPOLYMERISATEN ALS ADDITIVE FÜR LACKE**
USAGE OF COPOLYMERIZATION AS ADDITIVES FOR LACQUERS
UTILISATION DE COPOLYMÈRES COMME ADDITIFS POUR DES PEINTURES

(30) Priorität: 19.03.2009 DE 102009013902
(43) Veröffentlichungstag der Anmeldung: 25.01.2012
(73) Patentinhaber: Clariant Finance (BVI) Limited, Road Town, Tortola (VG)
(72) Erfinder: BACH, Sebastijan, 86462 Achsheim (DE); HOHNER, Gerd, 86152 Augsburg (DE)
(74) Vertreter: Jacobi, Carola
(86) Internationale Anmeldenummer: PCT/EP2010/001637
(87) Internationale Veröffentlichungsnummer: WO 2010/105797

(56) Entgegenhaltungen:
- EP-A1- 2 020 420
- WO-A1-03/087242
- WO-A1-03/104289
- WO-A1-2007/039421
- DE-A1- 10 224 845
- US-A1- 2003 154 885

## Beschreibung

Die Erfindung betrifft die Verwendung von Copolymerwachsen als Additive für Lacksysteme. Die Copolymerwachse werden hergestellt durch radikalisch initiierte Umsetzung von langkettigen Olefinkohlenwasserstoffen mit ungesättigten Polycarbonsäuren oder deren Anhydriden. Die Erfindung betrifft weiterhin so hergestellte und durch Mikronisierung feinteilig zerkleinerte Copolymerwachse.

Die Verwendung von feinverteilten Wachsen in allen gebräuchlichen Lacksystemen ist heute Stand der Technik und dient u. a. dazu, dem Lackfilm erhöhte mechanische Widerstandsfähigkeit zu verleihen sowie Mattierungseffekte zu bewirken. Durch den Wachszusatz werden die Kratz- und Abriebfestigkeit verbessert, gleichzeitig erhält die Filmoberfläche infolge diffuser Streuung des einfallenden Lichtes an den fein verteilten Wachspartikein ein mattes Aussehen. Weiterhin sorgen die Wachszusätze für eine wirksame Dispergierung der Lackpigmente und verringern deren Absetzneigung. Wachse verbessern das Gleitverhalten (den "slip") und beeinflussen vorteilhaft die haptischen Eigenschaften des Lackfilms. Mit Hilfe von Wachsen lässt sich das rheologische Verhalten des Lacksystems optimieren. In Pulverlacken sorgen Wachse für eine Durchsatzerhöhung bei der Fertigung im Extruder und sind als Entgasungshilfe wirksam.

Als Lackadditive bewährt haben sich seit längerer Zeit Kohlenwasserstoffwachse, insbesondere Fischer-Tropsch- und Polyethylenwachse, hergestellt durch katalytische Aufbaureaktion aus Synthesegas bzw. durch Ethylenpolymerisation auf radikalischem Weg oder mittels Ziegler- oder Metallocenkatalyse (Adhäsion 11 (1977), S. 311; EP 0 890 619). Gebräuchlich sind auch sogenannte Abbauwachse, die durch thermische Degradation von Polyethylen-Kunststoffen entstehen. In allen diesen Fällen handelt es sich um unpolare, gerad- oder verzweigtkettige aliphatische Strukturen. Weiterhin sind funktionalisierte Wachse mit mehr oder minder hohem Anteil an polaren Gruppen in Gebrauch, hergestellt z. B. durch oxidativen Abbau von Polyethylen oder Polyethylenwachsen. Geeignete polare Wachse sind außerdem Amidwachse (EP-B-0 028 713) sowie Estergruppen enthaltende Wachse, beispielsweise Montan- oder Carnaubawachs, wie in der DE-A-10 224 845 beschrieben. Die letztgenannte Schrift offenbart darüber hinaus die Verwendung von Wachsmischungen, die neben zahlreichen anderen polaren Substanzen auch Copolymere aus C₅-C₁₈-Olefinen mit Maleinsäureanhydrid enthalten können.

Für die Einarbeitung der Kohlenwasserstoffwachse in das Lacksystem kommen unterschiedliche Verfahren in Frage. Beispielsweise kann man das Wachs in einem Lösemittel heiß lösen und erhält durch anschließendes Abkühlen feinteilige flüssige Dispersionen oder Massen von pastenartiger Konsistenz, die mit dem Lack abgemischt werden. Möglich ist weiterhin die Vermahlung der Wachse in Gegenwart von Lösemitteln. Nach einer weitverbreiteten Technologie werden die Wachse auch als Feststoffe in Form von feinstverteilten Pulvern ("Mikronisaten") in die Lackrezeptur eingerührt. Die Feinstpulver werden entweder durch Mahlung, z. B. in Luftstrahlmühlen, oder durch Versprühung hergestellt. Die Partikelgrößen derartiger Pulver liegen in der Regel zu 100 % unterhalb 50 µm, die mittleren Partikelgrößen (Medianwerte) d₅₀ unterhalb 15 µm. Voraussetzung für die Vermahlbarkeit zu Mikronisat ist eine nicht zu niedrige Härte bzw. Sprödigkeit der Wachsprodukte.

Ein wichtiger Aspekt bei der Anwendung von mikronisierten Wachsen ist ihre Affinität zu den Hauptkomponenten des Lacks, in den sie eingebracht werden. Erwünscht ist eine schnelle und gründliche Benetzung des Wachspulvers durch die umgebende Flüssigkeit, so dass eine rasche Verteilung und wirksame Dispergierung erfolgen kann. Dies spielt bei allen aus polaren Komponenten zusammengesetzten, insbesondere bei wässrigen Lacksystemen eine entscheidende Rolle. Vor allem hinsichtlich dieser Anforderung besteht bei den heute eingesetzten wachsartigen Lackadditiven Optimierungsbedarf.

Aufgabe war es daher, für Lacksysteme einfach zugängliche Additive zur Verfügung zu stellen, mit denen sich gute Kratz- und Abriebfestigkeiten sowie gute Mattierungseffekte erreichen lassen und die sich insbesondere durch ein verbessertes Verhalten hinsichtlich der Einrühr- und Dispergierbarkeit auszeichnen.

Überraschend wurde gefunden, dass wachsartige Copolymere aus langkettigen alfa-Olefinen und ungesättigten Polycarbonsäuren bzw. deren Derivaten in diesem Sinne in hervorragender Weise geeignet sind.

Ein Gegenstand der Erfindung ist daher die Verwendung von Copolymerwachsen als Additive für Lacke, wobei die Copolymerwachse durch Umsetzung von langkettigen Olefinkohlenwasserstoffen im Kettenlängenbereich größer oder gleich 28 C-Atomen mit ungesättigten Polycarbonsäuren oder deren Anhydriden in Gegenwart mindestens eines Radikalstarters hergestellt werden.

Ein weiterer Erfindungsgegenstand sind so hergestellte und anschließend durch Vermahlung oder Versprühung in einen fein verteilten Zustand gebrachte Copolymerwachse, dadurch gekennzeichnet, dass die erzeugten Partikel kleiner als 50 µm, bevorzugt kleiner als 40 µm, besonders bevorzugt kleiner als 30 µm sind. Die Erfindung umfasst weiterhin derartige feinverteile Copolymerwachse mit einem Medianwert d₅₀ der Partikelgrößenverteilung unterhalb 15 µm, bevorzugt unterhalb 12 µm, besonders bevorzugt unterhalb 10 µm.

Radikalisch hergestellte Umsetzungsprodukte aus langkettigen alfa-Olefinen und Maleinsäureanhydrid sind bekannt. Beispielsweise wird in der US-Patentschrift 3,553,177 ein Verfahren zur Copolymerisation von Gemischen aliphatischer Olefine mit Maleinsäureanhydrid beschrieben. Die Reaktion wird mit Hilfe von Peroxiden und in Gegenwart von Ketonen als Lösungsmitteln durchgeführt. Umsetzungsprodukte aus langkettigen Olefinen mit Maleinsäureanhydrid sind weiterhin aus DE-OS 3 510 233 bekannt.

In EP-A-1 693 047 werden Copolymerwachse für kosmetische Zubereitungen offenbart, hergestellt aus C₂₆-C₆₀-alfa-Olefinen und Maleinsäureanhydrid.

Als alfa-Olefine kommen erfindungsgemäß solche mit Kettenlängen von 28 bis 60, bevorzugt von 30-60 C-Atomen in Frage. Es können sowohl kettenreine Olefine als auch Olefingemische eingesetzt werden, wie sie z. B. in den bekannten Herstellverfahren als Destillationsschnitte oder Destillationsrückstände anfallen. Technische alfa-Olefingemische, insbesondere solche mit höherer Kettenlänge, können neben 1-Alkenen mehr oder minder hohe Mengen innen- und seitenständige olefinische Doppelbindungen (Vinylen- und Vinylidengruppen) enthalten.

Repräsentative Beispiele für die zur Umsetzung mit den alfa-Olefinen verwendeten ungesättigten Polycarbonsäuren bzw. Anhydride sind Maleinsäure, Fumarsäure, Citraconsäure, Mesaconsäure, Aconitsäure oder Itaconsäure bzw. die Anhydride dieser Polycarbonsäuren, soweit zugänglich. Bevorzugt ist Maleinsäureanhydrid. Es können auch Mischungen dieser Polycarbonsäuren und Anhydride in beliebigen Verhältnissen eingesetzt werden. Das Einsatzverhältnis der Polycarbonsäuren bzw. Anhydride zur Eduktkomponente alfa-Olefin liegt zwischen 1:20 und 1:3, bevorzugt zwischen 1:10 und 1:4, besonders bevorzugt zwischen 1:7 und 1:5 Gewichtsteilen. Dementsprechend liegt der Einsatz von Polycarbonsäure bzw. Anhydrid, bezogen auf alfa-Olefin, zwischen 5 und 33 Gew.-%, bevorzugt zwischen 10 und 25 Gew.-%, besonders bevorzugt zwischen 14,3 und 20 Gew.-%.

Die Herstellung der erfindungsgemäß verwendeten Copolymerwachse erfolgt in an sich bekannter Weise durch Umsetzung der oben genannten. Komponenten bei erhöhter Temperatur unter Zusatz von organischen oder anorganischen radikalbildenden Initiatoren. Die Reaktion kann in Gegenwart oder in Abwesenheit eines Lösungsmittels durchgeführt werden. Letzteres Verfahren ist bevorzugt. Weiterhin kann die Umsetzung sowohl diskontinuierlich batchweise, z. B. im Rührkessel oder aber in einem kontinuierlich arbeitenden Reaktor erfolgen.

Geeignete organische Initiatoren sind z. B. Peroxide, beispielsweise Alkylhydroperoxide oder Dialkyl- oder Diarylperoxide, Diaroylperoxide, Perester oder Azoverbindungen. Bevorzugt sind Dialkylperoxide, speziell bevorzugt ist Di-tert.-butylperoxid. Es kommt jedoch auch jeder andere Initiator in Frage, sofern er bei der gewählten Reaktionstemperatur in Radikale zerfällt und die Reaktion in Gang zu setzen vermag. Die Initiatoren kommen in einer Menge von 0,1 bis 10 Gew.-%, bevorzugt 0,5 bis 5,0 Gew.-%, bezogen auf eingesetztes alfa-Olefin, zur Anwendung.

Die Reaktionstemperaturen liegen, wenn die Reaktion in Abwesenheit von Lösungsmittel durchgeführt wird, oberhalb der Schmelztemperatur des alfa-Olefins, z. B. zwischen 100 und 200 °C, bevorzugt 120 bis 180 °C, besonders bevorzugt zwischen 140 und 170 °C.

Die erfindungsgemäß verwendeten Copolymerwachse weisen folgende Eigenschaften auf:
Säurezahlen, bestimmt nach DIN 53402 unter Verwendung von wasserfreiem Ethanol und Xylol, zwischen 40 und 150 mg KOH/g, bevorzugt zwischen 60 und 130 mg KOH/g, besonders bevorzugt zwischen 70 und 120 mg KOH/g;
Dynamische Viskositäten, gemessen bei 100 °C, zwischen 50 und 5.000 mPa*s, bevorzugt zwischen 100 und 3.000 mPa*s, besonders bevorzugt zwischen 200 und 2.000 mPa*s;
Tropfpunkte zwischen 60 und 95 °C, bevorzugt zwischen 65 und 90 °C, besonders bevorzugt zwischen 70 und 80 °C;
Jodzahlen zwischen 0 und 30 g Jod/100 g, bevorzugt zwischen 3 und 20 g Jod/100 g, besonders bevorzugt zwischen 5 und 10 g Jod/100 g;
Stempelpenetrationen von höher als 200 bar, bevorzugt höher als 300 bar, besonders bevorzugt höher als 400 bar.

Die erfindungsgemäßen Wachse können in allen gebräuchlichen Lacksystemen, z. B. low/medium/high solids-Lacken, Iösemittelbasierenden Lacken, wasserverdünnbaren oder wässrigen Lacken und Pulverlacken eingesetzt werden. Sie können in reiner Form oder in Mischung mit weiteren als Lackadditive geeigneten Stoffen verwendet werden. Insbesondere sind Kombinationen mit anderen unpolaren oder polaren Wachsen möglich. In Frage kommen z. B. Kohlenwasserstoffwachse, etwa mikro- oder makrokristalline Paraffine, Fischer-Tropsch-Paraffine oder Polyethylen- oder Polypropylenwachse. Diese können auch polar modifiziert sein, z. B. durch Oxidation oder in sonstiger Weise, etwa durch Pfropfung oder Copolymerisation mit sauerstoffhaltigen Monomeren. Ebenso möglich sind Kombinationen mit anderen Klassen von Wachsen, z. B. Amidwachsen oder Esterwachsen in natürlicher oder chemisch veränderter Form, z. B. Montan- oder Carnaubawachsen. Als nicht wachsartige Zusatzstoffe sind geeignet z. B. niedrig- oder hochmolekulares Polytetrafluorethylen, Sorbitanester, Polyamide, Polyolefine, Polyester sowie anorganische Substanzen wie Siliciumdioxid oder Silikate.

Die Einarbeitung der erfindungsgemäßen Wachse oder Wachsmischungen in die Lackfarbe erfolgt in üblicher Weise über Lösemitteldispersionen, Pasten oder durch einfaches Einrühren mikronisierter Wachspulver. Letztere Verfahrensweise ist bevorzugt.

Die Mikronisierung kann durch Versprühung der Wachsschmelze oder durch Mahlung, z. B. mit Hilfe von Luftstrahlmühlen erfolgen. Der Versprühung oder Vermahlung kann sich gegebenenfalls eine Klassierung anschließen.

### Beispiele:

Die dynamischen Viskositäten der geschmolzenen Produkte wurden nach DIN 53019-1 bis 3 mit einem Rotationsviskosimeter, die Tropfpunkte nach ASTM D 3954 bestimmt. Die Säurezahlbestimmung erfolgte nach DIN 53402, mit dem Unterschied, dass die verwendeten Lösemittel Toluol und Ethanol in wasserfreier Form eingesetzt wurden, um eine hydrolytische Aufspaltung der Anhydridgruppen zu vermeiden. Die Bestimmung der Jodzahl erfolgte nach DIN EN 14111. Die Stempelpenetration als Maß für die Härte wurde nach der DGF-Methode M-III 9e gemessen (vgl. Fiebig, Braun, Fett/Lipid 98, 1996, Nr. 2, 86). Die Partikelgrößenanalyse bei Mikronisaten wurde durch Laserbeugung mittels eines Gerätes des Typs Mastersizer 2000 (Malvern) unter Verwendung der Dispergiereinheit Scirocco 2000 durchgeführt.

### Herstellung der Copolymerwachse

2.500 g alfa-Olefin C₃₀+ (Olefingemisch der Fa. ChevronPhillips) wurden in einer mit Rührwerk, Innenthermometer und Destillationsbrücke ausgestatteten Glasapparatur unter Stickstoffüberlagerung aufgeschmolzen. Anschließend wurde die in Tab. 1 angegebene Menge an Maleinsäureanhydrid, verteilt auf sechs gleiche Portionen in Abständen von jeweils 30 min zudosiert. Innerhalb des gleichen Zeitraums wurde aus einem Tropftrichter kontinuierlich 50 g Di-tert.-butylperoxid zugegeben. Anschließend ließ man 1 h nachreagieren. Hierauf wurden flüchtige Anteile i. Vak. (ca. 30 mbar) abdestilliert. Nach ca. 30 min wurde durch Einleiten von Stickstoff auf Normaldruck entspannt. Die Daten der resultierenden Copolymerwachse sind in Tabelle 1 aufgelistet.

**Tabelle 1: Copolymerwachse aus alfa-Olefin C₃₀+ und Maleinsäureanhydrid**

| Beispiel | Einsatzmenge Maleinsäureanhydrid¹⁾ | Säurezahl | Viskosität/ 100 °C | Tropfpunkt | Stempelpenetration | Jodzahl |
|---|---|---|---|---|---|---|
| | Gew.-% | mg KOH/g | mPa*s | °C | bar | g Jod/100g |
| 1 | 15,0 | 80 | 329 | 74 | 510 | 8,2 |
| 2 | 18,0 | 93 | 2767 | 73 | 580 | 6,0 |

| | | | | | | |
|---|---|---|---|---|---|---|
| ¹⁾ bezogen auf eingesetztes alfa-Olefin | | | | | | |

### Anwendungstechnische Prüfungen

Die auf einer Luftstrahlmühle 100 AFG (Hosokawa Micron) mikronisierten Wachse (100 % kleiner als 25-30 µm, d₅₀-Werte zwischen 7,5 und 8,5 µm) wurden unter Rühren langsam und kontinuierlich in die Lackrezepturen eindosiert und danach unter intensivem Rühren mit Hilfe einer Dissolver-Scheibe 20 Minuten dispergiert.

Der Gleitreibungskoeffizient der Lackfilme wurde mit einem Friction Peel Tester 225-1 (Hersteller Thwing-Albert Instruments) bestimmt.

Die Messgrößen Transmission, haze (Trübung) und clarity (Bildschärfe) wurden mit Hilfe eines haze-gard plus-Gerätes ermittelt (Hersteller Sheen Instruments).

Zur Messung der Kratzfestigkeit nach Bosch diente ein Härteprüfstab Modell 318 (Hersteller Erichsen).

Für die Vergleichsbeispiele wurden folgende Handelsprodukte eingesetzt:
Crayvallac WN 1135: Polar modifiziertes mikronisiertes Polypropylenwachs, Hersteller Cray Valley
Ceridust 9615 A: Amidwachs enthaltendes mikronisiertes Wachsgemisch, Clariant International Ltd.
Ceridust 5551: Mikronisiertes Esterwachs, Clariant International Ltd.
Ceridust 3920 F: Mikronisiertes PTFE enthaltendes Polyethylenwachs, Clariant International Ltd.
Ceridust 3731: Mikronisiertes säurefunktionelles Polyethylenwachs, Clariant International Ltd.

### Prüfung in einem Nitrocellulose-Lack

### Rezeptur:

| | Gew.-Teile |
|---|---|
| Walsroder Nitrocellulose E 560 30 %ig in Isopropanol (Dow Wolff Cellulosics) | 14,3 |
| Alkyldal F 26 X (60 %ig in Xylol) (Alkydharz, Bayer) | 16,7 |
| Palatinol IC (Diisobutylphthalat) (BASF) | 1,5 |
| Unimoll BB (Benzylbutylphthalat) (Lanxess) | 1,5 |
| Butylacetat | 11,4 |
| Ethylacetat | 18,5 |
| Methylisobutylketon | 5,0 |
| Ethylglycol | 3,0 |
| Toluol | 12,0 |
| Xylol | 12,6 |
| Baysilone OL 17 (1 %ig in Xylol) (Bayer) | 3,5 |

### Ergebnisse:

| Beispiel Nr. | Wachsadditiv | Zusatzmenge | Glanzgrad (Winkel 60°) | Transmission | Haze | Clarity | Gleitreibungskoeff. | Kratzfestigkeit nach Bosch |
|---|---|---|---|---|---|---|---|---|
| | | Gew.-% | | % | % | % | | N |
| Ref. | Ohne Wachs | - | 152 | 91 | 1 | 100 | 0,74 | 0,1 |
| 1 | aus Bsp. 1 | 2 | 31 | 90 | 45 | 57 | 0,50 | 0,8 |
| 2 | aus Bsp. 1 | 4 | 14 | 90 | 72 | 29 | 0,46 | 0,4 |
| 3 | aus Bsp. 2 | 2 | 29 | 90 | 43 | 58 | 0,51 | 0.9 |
| 4 | aus Bsp. 2 | 4 | 12 | 91 | 70 | 29 | 0,44 | 0,5 |
| V1 | Crayvallac WN 1135 | 2 | 29 | 90 | 44 | 58 | 0,58 | 0,7 |
| V2 | Crayvallac WN 1135 | 4 | 13 | 90 | 70 | 28 | 0,54 | 0.2 |
| V3 | Ceridust 9615 A | 2 | 29 | 90 | 44 | 59 | 0,54 | 0,5 |
| V4 | Ceridust 9615 A | 4 | 13 | 89 | 70 | 29 | 0,49 | 0,3 |

Die Eindispergierung der erfindungsgemäßen Wachse in den Lack erfolgte deutlich rascher als die der Vergleichsprodukte.

### Prüfung in einem 2-Komponenten PUR-Lack

### Rezeptur:

| Komponente 1 | Gew.-Teile |
|---|---|
| Desmophen 1300 / 75 %ig in Xylol (Bayer) | 32,0 |
| Walsroder Nitrocellulose E 510 in 20 % E5O (Dow Wolff Cellulosics) | 1,5 |
| Acronal 4 L 10 %ig in Ethylacetat (BASF) | 0,2 |
| Baysilone OL 17 10 %ig in Xylol (Bayer) | 0,2 |
| Ethylacetat | 10,4 |
| Butylacetat | 11,0 |
| Methoxypropylacetat | 10,8 |
| Xylol | 8,9 |
| | |
| Summe | 75,0 |
| | |

| Komponente 2 | Gew.-Teile |
|---|---|
| Desmodur IL (Bayer) | 14,2 |
| Desmodur L 75 (Bayer) | 9,4 |
| Xylol | 1,4 |
| | |
| Summe | 25,0 |

### Ergebnisse:

| Beispiel Nr. | Wachsadditiv | Zusatzmenge | Glanzgrad (Winkel 60°) | Transmission | Haze | Clarity | Gleitreibungskoeff. | Kratzfestigkeit nach Bosch |
|---|---|---|---|---|---|---|---|---|
| | | Gew.-% | | % | % | % | | N |
| Ref. | Ohne Wachs | - | 159 | 91 | 0 | 100 | 0,68 | 0,1 |
| 5 | aus Bsp. 1 | 2 | 61 | 90 | 18 | 68 | 0,37 | 0,4 |
| 6 | aus Bsp. 1 | 4 | 28 | 90 | 39 | 51 | 0,35 | 0,8 |
| V 5 | Crayvallac WN 1135 | 2 | 72 | 90 | 13 | 72 | 0,38 | 0,2 |
| V 6 | Crayvallac WN 1135 | 4 | 36 | 90 | 30 | 48 | 0,36 | 0,7 |
| V 7 | Ceridust 9615 A | 2 | 73 | 90 | 12 | 73 | 0.41 | 0,2 |
| V 8 | Ceridust 9615 A | 4 | 39 | 90 | 26 | 51 | 0,38 | 0,5 |
| V 9 | Ceridust 5551 | 2 | 62 | 90 | 18 | 69 | 0,48 | 0,6 |
| V 10 | Ceridust 5551 | 4 | 26 | 89 | 40 | 42 | 0,49 | 0,6 |
| V 11 | Ceridust 3920 F | 2 | 76 | 90 | 12 | 74 | 0,40 | 0,3 |
| V 12 | Ceridust 3920 F | 4 | 42 | 90 | 26 | 54 | 0,38 | 0,6 |

Die Eindispergierung des erfindungsgemäßen Wachses in den Lack erfolgte deutlich rascher als die der Vergleichsprodukte.

### Prüfung in einem wässrigen Acryllack

### Rezeptur:

| | Gew.-Teile |
|---|---|
| Viacryl VSC 6295w/45WA (Solutia) | 88,5 |
| Butylglykol | 3,8 |
| Ethyldiglykol | 2,0 |
| Entmineralisiertes Wasser | 4,0 |
| Coatex BR 100 (Coatex) | 0,4 |
| Surfynol DF 110 (Biesterfeld Spezialchemie) | 0,5 |
| BYK 348 (Byk-Chemie) | 0,2 |
| BYK 347 (Byk-Chemie) | 0,2 |
| BYK 380 N (Byk-Chemie) | 0,4 |

### Ergebnisse:

| Beispiel Nr. | Wachsadditiv | Zusatzmenge | Glanzgrad (Winkel 60°) | Transmission | Haze | Clarity | Gleitreibungskoeff. | Kratzfestigkeit nach Bosch |
|---|---|---|---|---|---|---|---|---|
| | | Gew.-% | | % | % | % | | N |
| Ref. | Ohne Wachs | - | 153 | 91 | 0 | 100 | 0,56 | 0,1 |
| 7 | aus Bsp. 1 | 2 | 60 | 90 | 21 | 66 | 0,37 | 0,6 |
| 8 | aus Bsp. 1 | 4 | 31 | 90 | 39 | 45 | 0,37 | 0,3 |
| V 13 | Crayvallac WN 1135 | 2 | 65 | 90 | 22 | 72 | 0,36 | 0,6 |
| V 14 | Crayvallac WN 1135 | 4 | 35 | 90 | 38 | 52 | 0,36 | 0,5 |
| V 15 | Ceridust 9615 A | 2 | 70 | 90 | 22 | 75 | 0,35 | 0,5 |
| V 16 | Ceridust 9615 A | 4 | 37 | 90 | 40 | 55 | 0,34 | 0,3 |
| V 17 | Ceridust 3731 | 2 | 53 | 91 | 23 | 74 | 0,38 | 0,4 |
| V 18 | Ceridust 3731 | 4 | 27 | 90 | 42 | 55 | 0,37 | 0,8 |

Die Eindispergierung des erfindungsgemäßen Wachses in den Lack erfolgte deutlich rascher als die der Vergleichsprodukte.

### Prüfung in einem wässrigen UV-Lack

### Rezeptur:

| | Gew.-Teile |
|---|---|
| Bayhydrol UV VP LS 2282 (Bayer) | 60,0 |
| Dehydran 1293 (Cognis) | 0,80 |
| Irgacure 500 (Ciba) | 0,50 |
| BYK 348 (Byk-Chemie) | 0,50 |
| Wasser | 36,8 |
| SchwegoPUR 8050 (Schwegmann) | 0,90 |

### Ergebnisse:

| Beispiel Nr. | Wachsadditiv | Zusatzmenge | Glanzgrad (Winkel 60°) | Transmission | Haze | Clarity | Gleitreibungskoeff. | Kratzfestigkeit nach Bosch |
|---|---|---|---|---|---|---|---|---|
| | | Gew.-% | | % | % | % | | N |
| Ref. | Ohne Wachs | - | 152 | 91 | 1 | 99 | 0,83 | 0,1 |
| 9 | aus Bsp. 1 | 2 | 52 | 90 | 20 | 57 | 0,49 | 0,7 |
| 10 | aus Bsp. 1 | 4 | 22 | 90 | 46 | 32 | 0,4 | 1,1 |
| V 19 | Crayvallac WN 1135 | 2 | 58 | 90 | 22 | 65 | 0,48 | 0,5 |
| V 20 | Crayvallac WN 1135 | 4 | 26 | 90 | 43 | 38 | 0,43 | 1,2 |
| V 21 | Ceridust 9615 A | 2 | 68 | 90 | 19 | 68 | 0,52 | 0,6 |
| V 22 | Ceridust 9615 A | 4 | 31 | 90 | 39 | 43 | 0,42 | 0,9 |

Die Eindispergierung des erfindungsgemäßen Wachses in den Lack erfolgte deutlich rascher als die der Vergleichsprodukte.

## Patentansprüche

1. Fein verteilte Copolymerwachse, hergestellt durch
a) Umsetzung von langkettigen Olefinkohlenwasserstoffen im Kettenlängenbereich größer oder gleich 28 C-Atomen mit ungesättigten Polycarbonsäuren oder deren Anhydriden in Gegenwart mindestens eines Radikalstarters und
b) anschließende Mikronisierung durch Vermahlung oder Sprühung,
**dadurch gekennzeichnet, dass** die Partikel der vermahlenen oder versprühten Copolymerwachse kleiner als 50 µm, bevorzugt kleiner als 40 µm, besonders bevorzugt kleiner als 30 µm sind.

2. Fein verteilte Copolymerwachse nach Anspruch 1, wobei 98 bis 99, 5 % der Partikel, insbesondere 99,5 bis 100 % der Partikel kleiner als 50 µm, bevorzugt kleiner als 40 µm, besonders bevorzugt kleiner als 30 µm sind.

3. Fein verteilte Copolymerwachse gemäß Anspruch 1 und/oder 2, **gekennzeichnet durch** einen Medianwert d₅₀ der Partikelgrößenverteilung unterhalb 15 µm, bevorzugt unterhalb 12 µm, besonders bevorzugt unterhalb 10 µm.

4. Verwendung von Copolymerwachsen nach einem der Ansprüche 1 bis 3 als Additive für Lacke, wobei die Copolymerwachse durch Umsetzung von langkettigen Olefinkohlenwasserstoffen im Kettenlängenbereich größer oder gleich 28 C-Atomen mit ungesättigten Polycarbonsäuren oder deren Anhydriden in Gegenwart mindestens eines Radikalstarters hergestellt werden.

5. Verwendung von Copolymerwachsen gemäß Anspruch 4, **dadurch gekennzeichnet, dass** diese Säurezahlen zwischen 40 und 150 mg KOH/g, bevorzugt zwischen 60 und 130 mg KOH/g, besonders bevorzugt zwischen 70 und 120 mg KOH/g, bestimmt nach DIN 53402 unter Verwendung von wasserfreiem Ethanol und Toluol aufweisen.

6. Verwendung von Copolymerwachsen nach Anspruch 4 und/oder 5, **dadurch gekennzeichnet, dass** diese dynamische Viskositäten, gemessen bei 100 °C, zwischen 50 und 5.000 mPa*s, bevorzugt zwischen 100 und 3.000 mPa*s, besonders bevorzugt zwischen 200 und 2.000 mPa*s aufweisen.

7. Verwendung von Copolymerwachsen nach mindestens einem der vorherigen Ansprüche 4 bis 6, **dadurch gekennzeichnet, dass** diese Tropfpunkte zwischen 60 und 95 °C, bevorzugt zwischen 65 und 90 °C, besonders bevorzugt zwischen 70 und 80 °C aufweisen.

8. Verwendung von Copolymerwachsen nach mindestens einem der vorherigen Ansprüche 4 bis 7, **dadurch gekennzeichnet, dass** diese Jodzahlen zwischen 0 und 30 g Jod/100 g, bevorzugt zwischen 3 und 20 g Jod/100 g, besonders bevorzugt zwischen 5 und 10 g Jod/100 g aufweisen.

9. Verwendung von Copolymerwachsen nach mindestens einem der vorherigen Ansprüche 4 bis 8, **dadurch gekennzeichnet, dass** diese Stempelpenetrationen höher als 200 bar, bevorzugt höher als 300 bar, besonders bevorzugt höher als 400 bar aufweisen.

10. Verwendung von Copolymerwachsen nach mindestens einem der vorherigen Ansprüche 4 bis 9, wobei die Copolymerwachse durch Umsetzung von langkettigen Olefinkohlenwasserstoffen im Kettenlängenbereich größer oder gleich 28 C-Atomen mit Maleinsäureanhydrid erhalten werden.

11. Verwendung von Copolymerwachsen nach mindestens einem der vorherigen Ansprüche 4 bis 10, wobei die Copolymerwachse durch Umsetzung von langkettigen Olefinkohlenwasserstoffen im Kettenlängenbereich größer oder gleich 28 C-Atomen mit Maleinsäureanhydrid im Gewichtsverhältnis 1:20 bis 1:3 erhalten werden.

12. Verwendung von Copolymerwachsen nach mindestens einem der vorherigen Ansprüche 4 bis 11, **dadurch gekennzeichnet, dass** sie in Form von Dispersionen, Pasten oder Mikronisaten eingesetzt werden.

13. Verwendung von Copolymerwachsen nach mindestens einem der vorherigen Ansprüche 4 bis12, wobei die Partikel der Mikronisate kleiner als 50 µm, bevorzugt kleiner als 40 µm, besonders bevorzugt kleiner als 30 µm sind und die Medianwerte d₅₀ der Partikelgrößenverteilung unterhalb 15 µm, bevorzugt unterhalb 12 µm, besonders bevorzugt unterhalb 10 µm liegen.

14. Verwendung von Copolymerwachsen nach mindestens einem der vorherigen Ansprüche 4 bis 13, wobei die Copolymerwachse oder Mischungen der Copolymerwachse über Lösemitteldispersionen, Pasten oder durch Einrühren in die Lackfarbe eingearbeitet werden.

## Claims

1. A finely divided copolymer wax prepared by
a) reacting long-chain olefinic hydrocarbons in the chain-length range greater than or equal to 28 carbon atoms with unsaturated polycarboxylic acids or their anhydrides in the presence of at least one free-radical initiator and
b) subsequently micronizing, by milling or spraying,
wherein the particles of the milled or sprayed copolymer wax are smaller than 50 µm, preferably smaller than 40 µm, more preferably smaller than 30 µm.

2. The finely divided copolymer wax as claimed in claim 1, where 98% to 99.5% of the particles, more particularly 99.5% to 100% of the particles, are smaller than 50 µm, preferably smaller than 40 µm, more preferably smaller than 30 µm.

3. The finely divided copolymer wax as claimed in claim 1 and/or 2, having a particle size distribution median value d₅₀ of below 15 µm, preferably below 12 µm, more preferably below 10 µm.

4. The use of a copolymer wax as claimed in one of claims 1 to 3 as an additive for a coating material, the copolymer wax being prepared by reacting long-chain olefinic hydrocarbons in the chain-length range greater than or equal to 28 carbon atoms with unsaturated polycarboxylic acids or their anhydrides in the presence of at least one free-radical initiator.

5. The use of a copolymer wax as claimed in claim 4, wherein said wax has an acid number of between 40 and 150 mg KOH/g, preferably between 60 and 130 mg KOH/g, more preferably between 70 and 120 mg KOH/g, determined in accordance with DIN 53402 using anhydrous ethanol and toluene.

6. The use of a copolymer wax as claimed in claim 4 and/or 5, wherein said wax has a dynamic viscosity, measured at 100°C, of between 50 and 5000 mPa*s, preferably between 100 and 3000 mPa*s, more preferably between 200 and 2000 mPa*s.

7. The use of a copolymer wax as claimed in at least one of preceding claims 4 to 6, wherein said wax has a dropping point of between 60 and 95°C, preferably between 65 and 90°C, more preferably between 70 and 80°C.

8. The use of a copolymer wax as claimed in at least one of preceding claims 4 to 7, wherein said wax has an iodine number of between 0 and 30 g iodine/100 g, preferably between 3 and 20 g iodine/100 g, more preferably between 5 and 10 g iodine/100 g.

9. The use of a copolymer wax as claimed in at least one of preceding claims 4 to 8, wherein said wax has a die penetration of higher than 200 bar, preferably higher than 300 bar, more preferably higher than 400 bar.

10. The use of a copolymer wax as claimed in at least one of preceding claims 4 to 9, the copolymer wax being obtained by reacting long-chain olefinic hydrocarbons in the chain-length range greater than or equal to 28 carbon atoms with maleic anhydride.

11. The use of a copolymer wax as claimed in at least one of preceding claims 4 to 10, the copolymer wax being obtained by reacting long-chain olefinic hydrocarbons in the chain-length range greater than or equal to 28 carbon atoms with maleic anhydride in a weight ratio of 1:20 to 1:3.

12. The use of a copolymer wax as claimed in at least one of preceding claims 4 to 11, wherein said wax is used in the form of a dispersion, paste or micronizate.

13. The use of a copolymer wax as claimed in at least one of preceding claims 4 to 12, the particles of the micronizate being smaller than 50 µm, preferably smaller than 40 µm, more preferably smaller than 30 µm, and the particle size distribution median value d₅₀ being below 15 µm, preferably below 12 µm, more preferably below 10 µm.

14. The use of a copolymer wax as claimed in at least one of preceding claims 4 to 13, the copolymer wax or mixture thereof being incorporated via solvent dispersions, pastes or by stirred incorporation into the colored coating material.

## Revendications

1. Cires copolymères finement réparties, préparées par
a) transformation d'hydrocarbures oléfiniques à longue chaîne dans la plage de longueurs de chaîne supérieures ou égales à 28 atomes de carbone avec des acides polycarboxyliques insaturés ou leurs anhydrides en présence d'au moins un initiateur radicalaire et
b) micronisation consécutive par broyage ou pulvérisation, **caractérisées en ce que** les particules des cires copolymères broyées ou pulvérisées sont inférieures à 50 µm, de préférence inférieures à 40 µm, de manière particulièrement préférée inférieures à 30 µm.

2. Cires copolymères finement réparties selon la revendication 1, 98 à 99,5% des particules, en particulier 99,5 à 100% des particules étant inférieurs à 50 µm, de préférence inférieurs à 40 µm, de manière particulièrement préférée inférieurs à 30 µm.

3. Cires copolymères finement réparties selon la revendication 1 et/ou 2, **caractérisées par** une valeur médiane d₅₀ de la répartition des grosseurs des particules inférieure à 15 pm, de préférence inférieure à 12 µm, de manière particulièrement préférée inférieure à 10 µm.

4. Utilisation de cires copolymères selon l'une quelconque des revendications 1 à 3 comme additifs pour laques, les cires copolymères étant préparées par transformation d'hydrocarbures oléfiniques à longue chaîne dans la plage de longueurs de chaîne supérieures ou égales à 28 atomes de carbone avec des acides polycarboxyliques insaturés ou leurs anhydrides en présence d'au moins un initiateur radicalaire.

5. Utilisation de cires copolymères selon la revendication 4, **caractérisée en ce qu'**elles présentent des indices d'acide entre 40 et 150 mg de KOH/g, de préférence entre 60 et 130 mg de KOH/g, de manière particulièrement préférée entre 70 et 120 mg de KOH/g, déterminés selon la norme DIN 53402 en utilisant de l'éthanol anhydre et du toluène.

6. Utilisation de cires copolymères selon la revendication 4 et/ou 5, **caractérisée en ce qu'**elles présentent des viscosités dynamiques, mesurées à 100°C, entre 50 et 5000 mPa.s, de préférence entre 100 et 3000 mPa.s, de manière particulièrement préférée entre 200 et 2000 mPa.s.

7. Utilisation de cires copolymères selon au moins l'une quelconque des revendications précédentes 4 à 6, **caractérisée en ce qu'**elles présentent des points de goutte entre 60 et 95°C, de préférence entre 65 et 90°C, de manière particulièrement préférée entre 70 et 80°C.

8. Utilisation de cires copolymères selon au moins l'une quelconque des revendications précédentes 4 à 7, **caractérisée en ce qu'**elles présentent des indices d'iode entre 0 et 30 g d'iode/100 g, de préférence entre 3 et 20 g d'iode/100 g, de manière particulièrement préférée entre 5 et ,10 g d'iode/100 g.

9. Utilisation de cires copolymères selon au moins l'une quelconque des revendications précédentes 4 à 8, **caractérisée en ce qu'**elles présentent des pénétrations de poinçon supérieures à 200 bars, de préférence supérieures à 300 bars, de manière particulièrement préférée supérieures à 400 bars.

10. Utilisation de cires copolymères selon au moins l'une quelconque des revendications précédentes 4 à 9, les cires copolymères étant obtenues par transformation d'hydrocarbures oléfiniques à longue chaîne dans la plage de longueurs de chaîne supérieures ou égales à 28 atomes de carbone avec de l'anhydride de l'acide maléique.

11. Utilisation de cires copolymères selon au moins l'une quelconque des revendications précédentes 4 à 10, les cires copolymères étant obtenues par transformation d'hydrocarbures oléfiniques à longue chaîne dans la plage de longueurs de chaîne supérieures ou égales à 28 atomes de carbone avec de l'anhydride de l'acide maléique dans un rapport pondéral de 1:20 à 1:3.

12. Utilisation de cires copolymères selon au moins l'une quelconque des revendications précédentes 4 à 11, **caractérisée en ce qu'**elles sont utilisées sous forme de dispersions, de pâtes ou de produits micronisés.

13. Utilisation de cires copolymères selon au moins l'une quelconque des revendications précédentes 4 à 12, les particules des produits micronisés étant inférieures à 50 µm, de préférence inférieures à 40 µm, de manière particulièrement préférée inférieures à 30 µm et les valeurs médianes d₅₀ de la répartition des grosseurs des particules se situant au-dessous de 15 µm, de préférence au-dessous de 12 µm, de manière particulièrement préférée au-dessous de 10 µm.

14. Utilisation de cires copolymères selon les revendications précédentes 4 à 13, les cires copolymères ou les mélanges des cires copolymères étant incorporé(e)s via des dispersions solvantées, via des pâtes ou par délayage dans la peinture laque.
